(19) Europäisches Patentamt
European Patent Office
Office européen des brevets

(11) **EP 1 765 950 B1**

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **05754564.2**

(22) Anmeldetag: **14.06.2005**

(51) Int Cl.:
**C09J 7/02** *(2006.01)*

(86) Internationale Anmeldenummer:
**PCT/EP2005/052721**

(87) Internationale Veröffentlichungsnummer:
**WO 2006/003081 (12.01.2006 Gazette 2006/02)**

(54) **ZUMINDEST TEILFLÄCHIG MIT SELBSTKLEBEMASSE AUSGERÜSTETES FLÄCHENGEBILDE**

FLAT STRUCTURE THAT IS AT LEAST PARTIALLY PROVIDED WITH A SELF-ADHESIVE SUBSTANCE

STRUCTURE PLANE AU MOINS PARTIELLEMENT POURVUE DE MATIERE AUTO-ADHESIVE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.07.2004 DE 102004032391**

(43) Veröffentlichungstag der Anmeldung:
**28.03.2007 Patentblatt 2007/13**

(73) Patentinhaber: **TESA SE**
**20253 Hamburg (DE)**

(72) Erfinder:
• **BURMEISTER, Axel**
**21244 Buchholz (DE)**

• **FIENCKE, Jochen**
**22453 Hamburg (DE)**
• **NAGEL, Christoph**
**22417 Hamburg (DE)**

(56) Entgegenhaltungen:
EP-A- 1 045 015        WO-A-91/13752
WO-A-2004/087337    DE-A1- 3 346 100
DE-A1- 19 751 873

• **Horst Stöcker: "Taschenbuch mathematischer Formeln und moderner Verfahren" 1993, Verlag Harri Deutsch , Thun, Frankfurt a.M. * pages 93,97 ***

**Beschreibung**

Die Erfindung betrifft zumindest teilflächig mit Selbstklebemasse ausgerüstete Flächengebilde, wobei die Selbstklebemasse in Form einer Vielzahl geometrischer Körper auf einer ersten Flächenschicht des Flächengebildes vorliegt, sowie Verfahren zum Verkleben eines mit Selbstklebemasse ausgerüsteten Flächengebildes auf einem Substrat.

Die partielle Beschichtung von Trägermaterialien mit druckempfindlichen Selbstklebemassen ist eine bekannte Technik. So wird in der US 2,510,120 A die musterförmige Beschichtung in Streifenstrich oder anderen Geometrien zur verbesserten Wiederablösbarkeit beschrieben. Die DE 26 10 135 A1 beschreibt einen speziellen Klebmassen-Stempeldruck und die DE 28 34 441 A1 ein Hotmeltverfahren zum Auftragen eines Streifenstriches. Des weiteren wird in der DE 23 65 532 A1 ein Hotmeltverfahren zum Auftragen von Klebemassekonturen über Druckplatten 1 Klischees beschrieben. Selbstklebebänder mit rasterförmigen klebmassefreien Stellen werden in der DE 974 178 genannt. Auch im Siebdruck kann der Klebmasseauftrag erfolgen (DE 42 37 252 C2), wobei die Klebstoffkalotten auch unterschiedlich groß und/oder unterschiedlich verteilt sind (EP 0 353 972 B1), die Basisfläche der einzelnen Punkte im Vergleich zu deren Projektionsfläche kleiner ist (DE 197 51 873 A1) oder die Klebmasse aus Dispersion aufgetragen wird (DE 33 46 100 A1). Die DE 43 08 649 beschreibt das Aufbringen von zusammenhängenden Stege aus Klebmasse in Längs- und Querrichtung im Tiefdruck.

Weiterhin kann die Masse auch vollflächig aufgebracht werden und erst anschließend über Reliefwalzen (GB 836097) oder einen nachträglich aufgebrachten strukturierten Liner geformt werden. Letzteres Verfahren wird z.B. bei vielen seit Jahren im Markt befindlichen doppelseitigen Selbstklebebändern angewendet und wird auch in der EP 0 725 809 B1 beschrieben.

Als Trägermaterialien sind bereits unterschiedlichste Materialien vorbeschrieben. Zum Einsatz gelangen beispielsweise Folien-, Schaum-, Gewebe-, Papier-, Gewirke-, Vlies- oder Gelträger.

Der Träger kann ein- oder mehrschichtig vorliegen.

Der Erfindung liegt nun die Aufgabe zugrunde, ein selbstklebendes Flächengebilde (Klebeband, Etikett oder dergleichen) zu schaffen, das bei seiner Verwendung - beispielsweise als Lasersicherheitsetikett - bei nur geringem Andruck keinen oder nur einen relativ geringen Tack (Anfassklebrigkeit) und/oder keine oder nur eine relativ geringe Klebkraft aufweist und erst nach deutlichem Andruck seine Klebkraft entfaltet. Des Weiteren umfasst die Aufgabe der Erfindung Verfahren zum Verkleben eines mit Selbstklebemasse ausgerüsteten Flächengebildes auf einem Substrat zur Verfügung zu stellen.

Gelöst wird diese Aufgabe durch Verfahren, wie sie in den Ansprüchen 1 und 3 dargelegt sind, sowie durch ein zumindest einseitig partiell klebend ausgerüstetes Trägermaterial, wie es in den Ansprüchen 8 und 9 näher gekennzeichnet ist. Die Unteransprüche betreffen vorteilhafte Ausführungsformen der Erfindung sowie Anspruch 10 eine besonders vorteilhafte Verwendung des Trägermaterials.

Die Erfindung betrifft dementsprechend ein zumindest partiell mit Selbstklebemasse ausgerüstetes Flächengebilde, wobei die Selbstklebemasse in Form einer Vielzahl geometrischer Körper auf einer ersten Flächenschicht des Flächengebildes vorliegt, wobei weiterhin die Oberfläche zumindest einiger der geometrischen Körper zumindest partiell derart behandelt ist, dass der behandelte Teil der Oberfläche eine geringere Klebrigkeit aufweist als die nicht behandelte Selbstklebemasse.

Die Behandlung der Oberfläche "deaktiviert" die Selbstklebrigkeit der derart behandelten Oberflächenbereiche, während bevorzugt nicht behandelte Bereiche verbleiben, in denen die Selbstklebemasse ihre Klebrigkeit beibehält. Die Deaktivierung kann bis zu einem Stadium gehen, in dem in den behandelten Bereichen keine Klebrigkeit mehr vorliegt. Eine Ausführungsform der Erfindung ist derart gestaltet, dass die Oberfläche des Flächengebildes vollflächig behandelt ist, so dass keine Bereiche verbleiben, in denen die Selbstklebemasse ihre Klebrigkeit beibehält.

Ein in der vorstehenden Weise behandeltes Flächengebilde (teil- oder vollflächig deaktiviert) weist oberflächlich keine oder nur eine geringe Klebrigkeit auf, wenn es mit geringem Anpressdruck auf ein Substrat aufgebracht wird. Der Kontakt zwischen dem Flächengebilde und dem Substrat findet in diesem Stadium in erster Linie in den behandelten, deaktivierten Bereichen geringer Klebrigkeit statt.

Erhöht man den Anpressdruck, so kommen bei dem teilflächig behandelten Flächengebilde die nicht behandelten, klebrigen Bereiche in Kontakt mit dem Substrat, da sich die geometrischen Körper verformen ("plattgedrückt werden"). Weiterhin kann es zu einem Aufbrechen der deaktivierten Bereiche kommen, so dass auch hier die Selbstklebemasse hervortritt und die Klebrigkeit des Flächengebildes erhöht.

Das Aufbrechen der deaktivierten Bereiche führt bei den vollflächig behandelten Flächengebilden dazu, dass diese bei hinreichendem Anpressdruck eine genügend hohe Klebrigkeit zeigen.

Zumindest Teile der Oberfläche der Selbstklebemasse werden behandelt (deaktiviert), also in einen Zustand überführt, in dem die Klebemassegeometrien ihren Tack (Anfassklebrigkeit) und ihre Klebkraft deutlich verringern oder ganz verlieren. Diese Deaktivierung findet an der Oberfläche der Selbstklebegeometrien statt, ganz besonders bevorzugt auf den vom Träger an weitesten entfernten Spitzen einiger oder aller geometrischen Selbstklebekörper statt (vorzugsweise an ihren "Gipfeln"). Je nach Durchführung der Behandlung kann die Deaktivierung aber auch eine gewisse Eindringtiefe in die Selbstklebemasse aufweisen.

Der prozentuale Anteil der Oberfläche, in der diese deaktiviert ist, hängt von der Art der Anwendung und von der Klebkraft und dem Tack der nicht behandelten Klebmasse ab. Je höher die Klebkraft und der Tack der nicht behandelten Masse, desto größer ist vorteilhaft der prozentuale Anteil der deaktivierten Oberfläche.

In einer günstigen Ausführungsform der Erfindung sind alle geometrischen Körper partiell behandelt, so dass die behandelten Bereiche deaktiviert sind. In einer weiteren günstigen Ausführungsform der Erfindung sind alle geometrischen Körper vollflächig behandelt (deaktiviert).

Bevorzugt sind 1 bis 100% der Klebmasseoberfläche behandelt, besonders bevorzugt 10 bis 80% und ganz besonders bevorzugt 15 bis 75%.

Weiterhin können die Klebemassegeometrien unterschiedliche Höhen haben, wobei bei bestimmten Behandlungsarten bevorzugt nur die höheren Klebemassengeometrien partiell deaktiviert werden. Im Einzelnen können die Höhen der Kalotten unterschiedlich sein: Bevorzugt weisen 1% bis 95% der Kalotten eine größere Höhe auf, besonders bevorzugt 20% bis 80% und ganz besonders bevorzugt 30% bis 60%. Gleichzeitig lässt sich der Deaktivierungsgrad beliebig variieren.

Die Deaktivierung kann auf mechanischem Weg erfolgen, beispielsweise über den Auftrag einer Deckschicht aus Lacken, Farben, Pudern, Fasern, sonstigen Partikeln, jeweils bestehend aus allen erdenklichen chemischen und/ oder natürlichen Stoffen. Vorteilhafte Verfahren hierfür sind das Besprühen mit Substanzen, das Tauchen in ein Bad, das Beschichten über eine benetzte Walze oder andere dem Stand der Technik entsprechende Beschichtungsverfahren.

Eine weitere Möglichkeit der Deaktivierung der Selbstklebemasse ist die thermische, chemische oder physikalische Vernetzung von Bereichen der Selbstklebemassegeometrien. Ober die gezielte Steuerung beispielsweise der Temperatur, einer Strahlendosis und -wellenlänge oder einer Chemikalienkonzentration in einzelnen Teilbereichen der Selbstklebemassengeometrien kann beispielsweise eine Vernetzung der Klebmassenpolymere in eben diesen Teilbereichen bis zu einem Grad erfolgen, in dem die Klebmasse ihren Tack und Klebkraft nahezu bis vollständig verziert.

Die geometrischen Körper können insbesondere auf eine weitere Schicht einer Klebemasse, die mit der die geometrischen Körper bildenden Selbstklebemasse identisch oder verschieden ist, aufgetragen sein.

Sehr vorteilhaft kann die erste Flächenschicht des Flächengebildes auch ein Trägermaterial sein, so dass die geometrischen Körper auf dieses Trägermaterial aufgebracht sind. Das Trägermaterial kann insbesondere vorteilhaft in Form eines starren oder elastischen Folien-, Schaum-, Gewebe-, Papier-, Gewirk-, Vlies- oder Gelträgers vorliegen oder auch eine Lackschicht sein.

Für spezielle Anwendungen wie Sicherheits- oder Laseretiketten stellen sich besondere Anforderungen an den Träger. Die Materialien müssen irreversibel, besonders bevorzugt mit Laser, beschriftbar sein, für ein sicheres verletzungsfreies Aufkleben der Etiketten ausreichend flexibel, aber gleichzeitig so spröde sein, dass sie nach dem Aufkleben nicht mehr zerstörungsfrei abgelöst werden können. Eine weitere Anforderung ist eine ausreichende Hitzestabilität. Bevorzugt kommen hier Lacke zum Einsatz, besonders bevorzugt ein Verbund aus zwei verschieden farbigen Lacken, von denen die obere Schicht durch einen Laser weggebrannt werden kann, so dass die untere und andersfarbige Schicht zum Vorschein kommt.

Alle zuvor genannten Materialen können auch in den hier beschriebenen Produktaufbauten eingesetzt werden. Darüber hinaus sind alle starren und elastischen Materialien aus synthetischen und natürlichen Rohstoffen sowie trägerlose Systeme zu verwenden, die aus reiner Transferklebemasse bestehen. Des weiteren jegliche mehrschichtige Verbundaufbauten auch aus unterschiedlichen Materialien.

Weiter können diese Materialien vor- beziehungsweise nachbehandelt werden. Gängige Behandlungen sind Corona, Flamme, Fluor, Hydrophobieren, Kalandern, Tempern, Kaschieren, Stanzen, Bedrucken, Prägen und Eindekken.

Als für die erfindungsgemäße Idee einsetzbare Selbstklebemassen, insbesondere für die Beschichtung des Trägermaterials, lassen sich vorteilhaft thermoplastische Heißschmelzklebemassen auf Basis natürlicher und/oder synthetischer Kautschuke und/oder anderer synthetischer Polymere wie Acrylate, Methacrylate, Polyurethane, Polyolefine, Polyvinylderivate, Polyester und/oder Silikone mit entsprechenden Zusatzstoffen wie Klebharzen, Weichmachern, Stabilisatoren und/oder anderen Hilfsstoffen, soweit erforderlich, einsetzen.

Der Erweichungspunkt der Selbstklebemassen liegt bevorzugt höher als 50 °C, da die Applikationstemperatur in der Regel mindestens 90 °C beträgt, bevorzugt zwischen 120 °C und 150 °C beziehungsweise 180 °C und 220 °C bei Silikonen. Gegebenenfalls kann eine Nachvernetzung durch UV- oder Elektronenstrahlen-Bestrahlung angebracht sein, um besonders vorteilhafte Eigenschaften der Heißschmelzklebemassen einzustellen.

Insbesondere Heißschmelzklebemassen auf Basis von Blockcopolymeren zeichnen sich durch ihre vielfältige Variationsmöglichkeiten aus, denn durch die gezielte Anpassung der Glasübergangstemperatur der Selbstklebemasse infolge der Auswahl der Klebrigmacher, der Weichmacher sowie der Polymermolekülgröße und der Molekularverteilung der Einsatzkomponenten wird die notwendige funktionsgerechte Verklebung für die unterschiedlichen Anwendungen gewährleistet. Entsprechend sind diese Massen vorteilhaft einsetzbar.

Die hohe Scherfestigkeit der Heißschmelzklebemasse wird durch die hohe Kohäsivität der Polymere erreicht. Die gute Anfassklebrigkeit ergibt sich durch die eingesetzte Palette an Klebrigmachern und Weichmachern.

Für besonders stark klebende Systeme basiert die Heißschmelzklebemasse bevorzugt auf Blockcopolymeren, insbesondere A-B-, A-B-A-Blockcopolymere oder deren Mischungen. Die harte Phase A ist vornehmlich Polystyrol oder dessen Derivate, und die weiche Phase B enthält Ethylen, Propylen, Butylen, Butadien, Isopren oder deren Mischungen, hierbei besonders bevorzugt Ethylen und Butylen oder deren Mischungen.

Polystyrolblöcke können aber auch in der weichen Phase B enthalten sein, und zwar bis zu 20 Gew.-%. Der gesamte Styrolanteil sollte aber stets niedriger als 35 Gew.-% liegen.

Insbesondere die gezielte Abmischung von Di-Block- und Tri-Blockcopolymeren ist vorteilhaft, wobei ein Anteil an Di-Blockcopolymeren von kleiner 80 Gew.-% bevorzugt wird.

In einer vorteilhaften Ausführung weist die Heißschmelzklebemasse die nachfolgend angegebene Zusammensetzung auf:

| | |
|---|---|
| 10 Gew.-% bis 90 Gew.-% | Blockcopolymere, |
| 5 Gew.-% bis 80 Gew.-% | Klebrigmacher wie Öle, Wachse, Harze und/oder deren Mischungen, bevorzugt Mischungen aus Harzen und Ölen, |
| bis zu 60 Gew.-% | Weichmacher, |
| bis zu 15 Gew.-% | Additive, |
| bis zu 5 Gew.-% | Stabilisatoren. |

Die als Klebrigmacher dienenden aliphatischen oder aromatischen Öle, Wachse und Harze sind bevorzugt Kohlenwasserstofföle, -wachse und -harze. Als Weichmacher finden mittel- oder langkettige Fettsäuren und/oder deren Ester Verwendung. Diese Zusätze dienen dabei der Einstellung der Klebeeigenschaften und der Stabilität. Gegebenenfalls kommen weitere Stabilisatoren und andere Hilfsstoffe zum Einsatz.

Ein Füllen der Klebemasse mit mineralischen Füllstoffen, Fasern, Mikrohohl- oder -vollkugeln ist möglich.

Die Heißschmelzklebemasse weist einen Erweichungspunkt oberhalb von 70 °C auf, bevorzugt 95 °C bis 120 °C.

Insbesondere an industriell eingesetzte Flächengebilde werden hohe Anforderungen bezüglich der Idebeeigenschaften gestellt. Für eine ideale Anwendung sollte die Heißschmelzklebemasse eine hohe Anfassklebrigkeit besitzen. Weiterhin ist, damit es zu keinem Verrutschen kommt, eine hohe Scherfestigkeit der Heißschmelzklebemasse notwendig.

Durch die gezielte Absenkung der Glasübergangstemperatur der Klebemasse infolge der Auswahl der Klebrigmacher, der Weichmacher sowie der Polymermolekülgröße und der Molekularverteilung der Einsatzkomponenten wird die notwendige funktionsgerechte Verklebung mit den jeweiligen Verklebungsuntergründen und der Trägerrückseite erreicht. Die hohe Scherfestigkeit der hier eingesetzten Klebemasse wird durch die hohe Kohäsivität des Blockcopolymeren erreicht. Die gute Anfassklebrigkeit ergibt sich durch die eingesetzte Palette an Klebrigmachern und Weichmachern.

Die Produkteigenschaften wie Anfassklebrigkeit, Glasübergangstemperatur und Scherstabilität lassen sich mit Hilfe einer dynamisch-mechanischen Frequenzmessung gut quantifizieren. Hierbei wird ein schubspannungsgesteuertes Rheometer verwendet.

Die Ergebnisse dieser Messmethode geben Auskunft über die physikalischen Eigenschaften eines Stoffes durch die Berücksichtigung des viskoelastischen Anteils. Hierbei wird bei einer vorgegebenen Temperatur die Heißschmelzselbstklebemasse zwischen zwei planparallelen Platten mit variablen Frequenzen und geringer Verformung (linear viskoelastischer Bereich) in Schwingungen versetzt. Über eine Aufnahmesteuerung wird computerunterstützt der Quotient (Q = tan δ) zwischen dem Verlustmodul (G" viskoser Anteil) und dem Speichermodul (G' elastischer Anteil) ermittelt.

$$Q = \tan \delta = G''/G'$$

Für das subjektive Empfinden der Anfassklebrigkeit (Tack) wird eine hohe Frequenz gewählt sowie für die Scherfestigkeit eine niedrige Frequenz.

Ein hoher Zahlenwert bedeutet eine hohe Anfassklebrigkeit und eine geringere Scherstabilität.

Die Glasübergangstemperatur ist die Temperatur, bei der amorphe oder teilkristalline Polymere vom flüssigen oder gummielastischen Zustand in den hartelastischen oder glasigen Zustand übergehen oder umgekehrt (vgl. beispielsweise Römpp Chemie-Lexikon, 9. Aufl., Band 2, Seite 1587, Georg Thieme Verlag Stuttgart - New York, 1990). Er entspricht dem Maximum der Temperaturfunktion bei vorgegebener Frequenz.

Die Heißschmelzklebemassen sind vorzugsweise so eingestellt, dass sie bei einer Frequenz von 0,1 rad/s eine dynamisch-komplexe Glasübergangstemperatur von weniger als 15 °C, bevorzugt von 0 °C bis -30 °C, ganz besonders bevorzugt von -3 °C bis -15 °C, aufweisen.

Bevorzugt werden erfindungsgemäß Heißschmelzklebemassen, bei denen das Verhältnis des viskosen Anteils zum elastischen Anteil bei einer Frequenz von 100 rad/s bei 25 °C größer 0,7 ist, oder Heißschmelzselbstklebemassen, bei denen das Verhältnis des viskosen Anteils zum elastischen Anteil bei einer Frequenz von 0,1 rad/s bei 25 °C kleiner 0,4 ist, bevorzugt zwischen 0,35 und 0,02, ganz besonders bevorzugt zwischen 0,3 und 0,1.

Vorteilhaft ist der partielle Auftrag der Klebmasse auf dem Trägermaterial, beispielsweise durch Rasterdruck, Thermosiebdruck, Thermoflexodruck oder Tiefdruck. Bei im Voll- oder Teilstrich sowie im Düsenverfahren klebend ausgerüsteten Trägermaterialien kann die Klebmasse nachträglich mit Reliefwalzen und/oder strukturierten Linern geformt werden. Ebenfalls kann ein partieller Klebmasseauftrag einer zweiten Klebmasse auf einen zuvor aufgebrachten Teil- oder Vollstrich einer ersten Klebmasse mit eventuell auch unterschiedlichen Eigenschaften erfolgen. Weiterhin kann auch ein zweiter oder weiterer, partieller Klebmassenauftrag der ersten Klebmasse auf einen zuvor erfolgten Aufstrich, insbesondere einen Vollaufstrich, derselben Klebmasse erfolgen.

In einer bevorzugten Ausführungsform ist die Selbstklebemasse in Form von polygeometrischen Kalotten auf den Träger aufgebracht. Die Kalotten können unterschiedliche Formen aufweisen. Bevorzugt sind abgeflachte Halbkugeln; je nach Anwendung kann das Verhältnis von Durchmesser zu Höhe aber auch kleiner 1 sein. Weiterhin ist auch der Aufdruck anderer Formen und Muster auf dem Trägermaterial möglich, so beispielsweise ein Druckbild in Form alphanumerischer Zeichenkombinationen oder Muster wie Gitter, Streifen und Zickzacklinien.

Ferner kann die Selbstklebemasse beispielsweise auch aufgesprüht sein, was ein mehr oder weniger unregelmäßiges Auftragsbild ergibt.

Die Klebemasse kann gleichmäßig auf dem Trägermaterial verteilt sein, sie kann aber auch funktionsgerecht für das Produkt über die Fläche unterschiedlich stark oder dicht aufgetragen sein.

Der partielle Klebmasseauftrag kann bei geeigneter Wahl der Geometrien auch nach der Applikation des Flächengebildes durch das Verbleiben geregelter Kanäle die Abführung von Gasen und / oder Flüssigkeiten ermöglichen. Dieses Ableiten kann sowohl parallel zur Verklebungsfläche durch die Kanäle bis an den Rand des Flächengebildes, als auch in einem Winkel von der Verklebungsfläche abweichend in oder durch ein durchlässiges Trägermaterial erfolgen.

Die Herstellung eines selbstklebend ausgerüsteten Flächengebildes kann auf verschiedenen Wegen erfolgen. Das Trägermaterial oder die erste Flächenschicht kann sowohl direkt mit Klebmasse beschichtet werden, also auch indirekt über einen Hilfsträger. Letzteres Verfahren zeichnet sich durch insgesamt drei Verfahrensschritte aus.

Im ersten Schritt werden die aus Heißschmelzklebemasse gebildeten, geometrischen Körper durch Rasterdruck, Thermosiebdruck oder Tiefdruck oder durch das Düsenverfahren auf einen Hilfsträger aufgebracht, im zweiten Schritt der Hilfsträger mit den Körpern an das Trägermaterial geführt, schließlich die Körper vom Hilfsträger auf das Trägermaterial übertragen.

Unter dem Begriff Hilfsträger sollen herkömmliche, endlose Bahnen aus unterschiedlichen Materialien, aber auch Vorrichtungen wie Übertragungswalzen verstanden werden.

Je nach Trägermaterial und dessen Temperaturempfindlichkeit kann aber die Heißschmelzklebemasse direkt auf das Trägermaterial aufgetragen werden.

Auch ein nachträgliches Kalandern des beschichteten Produktes und/oder eine Vorbehandlung des Trägers, wie Coronabestrahlung, zur besseren Verankerung der Klebeschicht kann vorteilhaft sein.

Weiterhin kann eine Behandlung der Heißschmelzklebemasse mit einer Elektronenstrahl-Nachvernetzung oder einer UV-Bestrahlung zu einer Verbesserung der gewünschten Eigenschaften führen.

Das Prinzip des Thermosiebdrucks besteht in der Verwendung einer rotierenden beheizten, nahtlosen, trommelförmigen perforierten Rundschablone, die über eine Düse mit der bevorzugten Heißschmelzklebemasse beschickt wird. Eine speziell geformte Düsenlippe

(Rund- oder Vierkantrakel) presst die über einen Kanal eingespeiste Heißschmelzklebemasse durch die Perforation der Schablonenwand auf die vorbei geführte Trägerbahn. Diese wird mit einer Geschwindigkeit, die der Umgangsgeschwindigkeit der rotierenden Siebtrommel entspricht, mittels einer Gegendruckwalze gegen den Außenmantel der beheizten Siebtrommel geführt.

Die Ausbildung der kleinen Klebstoffkalotten geschieht dabei nach folgendem Mechanismus:

Der Düsenrakeldruck fördert die Heißschmelzklebemasse durch die Siebperforation an das Trägermaterial. Die Größe der ausgebildeten Kalotten wird durch den Durchmesser des Siebloches vorgegeben. Entsprechend der Transportgeschwindigkeit der Trägerbahn (Rotationsgeschwindigkeit der Siebtrommel) wird das Sieb vom Träger abgehoben. Bedingt durch die hohe Adhäsion der Klebemasse und die innere Kohäsion der Heißschmelzklebemasse wird von der auf dem Träger bereits haftenden Basis der Kalotten der in den Löchern begrenzte Vorrat an Heißschmelzklebemasse konturenscharf abgezogen beziehungsweise durch den Rakeldruck auf den Träger gefördert.

Nach Beendigung dieses Transportes formt sich, abhängig von der Rheologie der Heißschmelzklebemasse, über der vorgegebenen Basisfläche die mehr oder weniger stark gekrümmte Oberfläche der Kalotte. Das Verhältnis Höhe zur Basis der Kalotte hängt vom Verhältnis Lochdurchmesser zur Wandstärke der Siebtrommel und den physikalischen Eigenschaften (Fließverhalten, Oberflächenspannung und Benetzungswinkel auf dem Trägermaterial) der Selbstklebemasse ab.

Bei der Siebschablone im Thermosiebdruck kann das Steg/Loch-Verhältnis kleiner 3:1 sein, bevorzugt kleiner oder gleich 1:1, insbesondere gleich 1:3.

Der beschriebene Bildungsmechanismus der Kalotten erfordert bevorzugt saugfähige oder zumindest von Heißschmelzklebemasse benetzbare Trägermaterialien. Nichtbenetzende Trägeroberflächen müssen durch chemische oder physikalische Verfahren vorbehandelt werden. Dies kann durch zusätzliche Maßnahmen wie zum Beispiel Coronaentladung, Flammvorbehandlung, Plasmavorbehandlung oder Beschichtung mit benetzungs- verbessernden Stoffen, z.B. Primern, geschehen.

Mit dem aufgezeigten Druckverfahren kann die Größe und Form der Kalotten definiert festgelegt werden. Die für die Anwendung relevanten Klebkraftwerte, die die Qualität der erzeugten Produkte bestimmen, liegen bei sachgerechter Beschichtung in sehr engen Toleranzen. Der Basisdurchmesser der Kalotten wird vorteilhaft von 10 $\mu$m bis 5000 $\mu$m gewählt, die Höhe der Kalotten von 5 $\mu$m bis 2000 $\mu$m, bevorzugt von 10 $\mu$m bis 1000 $\mu$m, ganz besonders bevorzugt 20 $\mu$m - 100 $\mu$m, wobei der Bereich kleiner Durchmesser für glatte Träger, der mit größerem Durchmesser und größerer Kalottenhöhe für rauhe oder stark porige Trägermaterialien vorgesehen ist.

Je nach Anwendung kann die Klebmasse in unterschiedlichen vorteilhaften Geometrien aufgebracht werden. Um ein ungewünschtes Anheften/Verkleben des Flächengebildes vor der eigentlichen gewünschten Verklebung zu verhindern, ist es beispielsweise vorteilhaft, Geometrien mit steilen Flanken zu wählen. Dies kann z.B. bei Klebmassenkalotten, -stegen oder -zylindern durch ein großes Höhen- zu Basisflächenverhältnis erreicht werden. Die vollflächige oder partielle Deaktivierung der Klebmasse erfolgt dann besonders bevorzugt nur in den höhergelegen Bereichen, beispielsweise auf den Spitzen der Klebmassegeometrien. Dieses so ausgerüstete Flächengebilde (Selbstklebeband, Etikett oder dergleichen) lässt sich problemlos positionieren, repositionieren, da eine räumlichen Trennung von aktiver Selbstklebemasse zum Verklebungsuntergrund vorliegt. Solange kein über einem gewissen Schwellenwert liegender Andruck ausgeübt wird, findet keine Haftung oder Verklebung auf einem derartigen Produktaufbau statt. Dabei hängt der Schwellenwert, also der nötige Anpressdruck unter anderem von der Geometrie, Rheologie und dem Grad sowie der Form der Deaktivierung ab und kann über diese eingestellt werden.

Eine Verklebung kann erst stattfinden, wenn diese Barriere durch deutlichen Andruck überwunden wird. Durch diesen Andruck verformt sich die Selbstklebemasse derart, dass der Verklebungsuntergrund mit der aktiven Selbstklebmasse in Kontakt kommt.

Bei anderen Anwendungen, bei denen eine sichere Endverklebung im Vordergrund steht, kann es vorteilhafter sein, die Geometrien flacher, und die Flächen der partiellen Deaktivierung kleiner zu wählen.

Die Positionierung der Kalotten auf dem Träger wird durch die in weiten Grenzen variierbare Geometrie des Auftragswerkes, zum Beispiel Gravur- oder Siebgeometrie, definiert festgelegt. Mit Hilfe der aufgezeigten Parameter kann über einstellbare Größen das gewünschte Eigenschaftsprofil der Beschichtung, abgestimmt auf die verschiedenen Trägermaterialien und Anwendungen, sehr genau eingestellt werden.

Der prozentuale Anteil, der mit der Selbstklebemassegeometrien beschichteten Fläche sollte mindestens 20 % betragen und kann bis zu ungefähr 95 % reichen. Dieses kann gegebenenfalls durch Mehrfachapplikation erreicht werden, wobei gegebenenfalls auch Selbstklebemassen mit unterschiedlichen Eigenschaften eingesetzt werden können.

Durch eine gesteuerte Temperaturführung und/oder das Einbringen von Strahlungs-, mechanischer oder Sekundärenergie während der Herstellung kann bei thermoplastischen Selbstklebemassen eine Geometriemodifizierung der geometrischen Körper erfolgen, wobei die Kopf- und Basisdurchmesser in großen Grenzen variiert werden können. Bevorzugt kann auch eine gesteuerte Temperaturführung an der Oberfläche der thermoplastischen oder elastischen Primärkalotten, also der auf dem Hilfsträger aufgebrachten Kalotten, erfolgen, zum Beispiel durch Strahlungserhitzung wie IR, mit deren Hilfe Sekundärkalotten erzeugt werden können, die für eine Produkttransferierung optimale Verklebungseigenschaften aufweisen.

Eine Addition bei der Energiesteuerung im Material und/oder an der Oberfläche der Polymere lässt eine große Vielfalt von polygeometrischen Kalottenformen zu. Zur endgültigen Ausformung der transferierten Sekundärkalotte kann eine regulierbare Druckstation (Spalt/Druck/Temperatur/Geschwindigkeit) von Vorteil sein. Auch nachträgliches Kalandern kann vorteilhaft sein.

Das vor der Transferierung der Sekundärkalotte vorliegende viskoelastische Eigenschaftsprofil der Körper aus Selbstklebemasse kann durch das Steuern der Wärmeenergie aus dem Beschichtungsprozess, das wenigstens teilweise Einbringen von Oberflächenenergie oder den wenigstens teilweisen Entzug von Wärmeenergie oder eine Kombination der Verfahren eingestellt werden.

Die geometrischen Körper lassen sich demgemäß in mehrere Zonen einteilen, die durchaus unterschiedliche Eigenschaften aufweisen können. Vorzugsweise haben die auf den Hilfsträger aufgebrachten geometrischen Körper zum Zeitpunkt des Transfers auf das Trägermaterial in der Basiszone, die dem Teil des Körpers entspricht, der sich am Trägermaterial anschließt, ein Plastizitäts-/Elastizitätsverhältnis bei einer Frequenz von 100 rad/s von 0,4 bis 50 und in der Kopfzone, die der Basiszone gegenüberliegend den äußeren Teil des Körpers darstellt, ein Plastizitäts-/Elastizitätsverhältnis von größer 0,3, bevorzugt 0,4 bis 50, wobei das Plastizitäts-/Elastizitätsverhältnis in der Kopfzone nicht kleiner ist als in der Basiszone.

Die Selbstklebemasse kann mit einem Flächengewicht von größer 6 g/m$^2$, bevorzugt zwischen 20 g/m$^2$ und 300 g/m$^2$, ganz besonders bevorzugt zwischen 30 g/m$^2$ und 180 g/m$^2$, auf dem Trägermaterial aufgetragen sein. Dabei kann die Beschichtung in mehreren Schritten mit Klebemassen unterschiedlicher Eigenschaften und / oder unterschiedlichen Geometrien erfolgen. Weiterhin können der Produktaufbau, die Geometrien und Masseeigenschaften derart gewählt werden, dass während der Verklebung ein vollflächiger Kontakt ohne Einschlüsse dritter Medien (beispielsweise Luft oder Flüssigkeiten) zwischen der Klebmasse und dem Verklebungsuntergrund entsteht. Andere bevorzugte Produktaufbauten können darauf abzielen, auch nach Verklebung noch Kanäle in der Klebmasse bestehen zu lassen, also keine vollflächige Verklebung zu erreichen.

Bevorzugt nach dem Auftrag der Klebemasse auf die erste Flächenschicht erfolgt die Behandlung (Deaktivierung) der Klebemasse entsprechend dem obenstehend gesagten.

Die strukturierte oder in geometrischen Formen aufgebrachte Selbstklebemasse reduziert beim Positionieren des Verbundes die Anfangsverklebungsfläche. Sind zusätzlich noch Bereiche der strukturierten Selbstklebemasse, vorzugsweise die hochgelegenen Flächen, die zuerst mit dem Verklebungsuntergrund in Berührung kommen, durch eine mechanische, chemische oder physikalische Nachbehandlung, z.B. durch ein nachträgliches Bedrucken dieser Flächen mit einem Lack deaktiviert, so kann entweder der selbstklebende Verbund selbst, oder ein aufzuklebendes Gegenstück problemlos in Position gebracht werden, da solange ohne Andruck gearbeitet wird, die Selbstklebemasse nicht oder nur in kleinen Bereichen mit dem Verklebungsuntergrund in Kontakt kommt. Erst wenn die exakte Position gefunden wurde, wird Druck auf die Verklebungsfläche ausgeübt, so dass die Selbstklebemasse in Kontakt mit der Verklebungsfläche tritt. Mögliche Anwendungen sind somit solche, bei denen das Flächengebilde (Selbstklebeband, Etikett oder dergleichen) exakt vor dem Festkleben positioniert werden muss.

Durch unterschiedliche Ausführungsformen der Kalotten und/oder der Deaktivierungsgrade kann das Flächengebilde an die entsprechende Anwendung angepasst werden.

Ohne weitere Anwendungen ausschließen zu wollen, lässt sich die Erfindung sehr vorteilhaft z.B. für hochempfindliche (z.B. spröde, einreißbare oder leicht verletz- oder zerstörbare) Trägermaterialien, wie dünne Papiere und besonders bevorzugt Laseretiketten (Sicherheitsetiketten) anwenden. Die hervorragenden Eigenschaften des erfindungsgemäßen, selbstklebend ausgerüsteten Trägermaterials bieten seine Verwendung als Laserlabel / Sicherheitsetikett an.

Weiterhin eignet sich das erfindungsgemäße Flächengebilde für Anwendungen, bei denen nur ausgewählte Bereiche des Selbstklebebandes zur Verklebung benötigt werden, die übrigen überstehenden Bereiche jedoch nicht kleben sollen, um z. B. keinen Staub / Schmutz anzuziehen, oder nicht im Weiterverarbeitungsprozess zu stören. Beispielsweise werden in der Druckindustrie Selbstklebebänder zur Montage von Flexodruckplatten eingesetzt. In dieser Anwendung wird zumeist ein doppelseitiges Klebeband vollflächig auf den Druckzylinder geklebt und anschließend nur in bestimmten Bereichen eine oder mehrere Druckplatten aufgebracht. Die umliegenden Bereiche sind nach wie vor selbstklebend. Speziell beim Bedrucken von Papieren können diese Bereiche zu Papierstaubfängern werden, es können sich hier Schmutzpartikel anlagern, die sich im Extremfall zu einer solchen Höhe aufbauen können, dass sie mitdrucken und dadurch das Druckbild verunstalten. Hier kann das erfindungsgemäße Flächengebilde Abhilfe schaffen, da an der deaktivierten Klebmasse kein Staub haften bleibt.

Weiterhin kann das Flächengebilde nach dem Beschichtungsvorgang mit einem klebstoffabweisenden Trägermaterial, wie silikonisiertes Papier, eingedeckt und damit u.a. geschützt werden. Ist die Selbstklebemasse vollflächig deaktiviert, können auch andere Abdeckungen erforderlich werden, wie z.B. nicht silikonisierte Folien und Papiere oder sogar mit Selbstklebemasse beschichtete Folien oder Papiere, die einen ausreichenden Halt der Abdeckung auf der erfindungsgemäßen Selbstklebemasse vor dem Gebrauch sicherstellen.

Es eignet sich auch hervorragend für technische reversible Fixierungen, welche beim Abziehen keine Verletzung oder Beschädigung von diversen Untergründen, wie Papier, Kunststoffe, Glas, Textilien, Holz, Metalle oder Mineralien, zulassen.

Schließlich können technisch permanente Verklebungen hergestellt werden, welche nur unter teilweiser Spaltung des Untergrundes getrennt werden können.

Anhand mehrerer Figuren sollen vorteilhafte Ausführungsformen des Erfindungsgegenstandes dargestellt werden, ohne damit die Erfindung unnötig beschränken zu wollen.

Es zeigen

Figur 1 Ein mit Klebemassen-Geometrien in Kalottenform beschichtetes und partiell deaktiviertes Trägermaterial im seitlichen Schnitt vor dem verklebten Zustand, beispielsweise während des Positionierens, die Klebemassekalotten haben dabei einen räumlichen Abstand voneinander.

Figur 2    Das beschichtete Trägermaterial gemäß Figur 1 im Verklebungszustand. Die durch den Andruck verformten Kalotten lassen Kanäle frei, durch die bei- spielsweise Fluide von der Verklebungsebene abfließen können.

Figur 3    Ein mit Klebemassen-Geometrien beschichtetes und partiell deaktiviertes Trä- germaterial im seitlichen Schnitt vor dem verklebten Zustand, beispielsweise während des Positionierens, die Basen der Klebemassekalotten haben dabei keinen räumlichen Abstand voneinander.

Figur 4    Das beschichtete Trägermaterial gemäß Figur 3 im Verklebungszustand. Die durch den Andruck verformten Kalotten bilden eine vollflächige Verklebung.

Figur 5    Ein mit unterschiedlich geformten Kalotten und unterschiedlichen Deaktivie- rungsgraden beschichtetes Trä- germaterial im seitlichen Schnitt.

Figur 6    Ein mit unterschiedlich geformten Kalotten und unterschiedlichen Deaktivie- rungsgraden beschichtetes Trä- germaterial im seitlichen Schnitt. 50% der Kalotten haben eine größere Höhe und sind an ihren Spitzen deaktiviert.

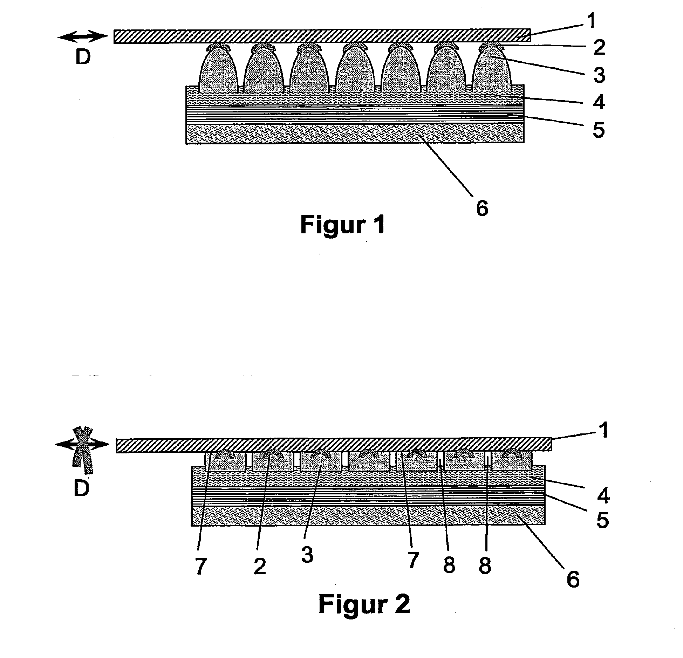

Die Figur 1 zeigt einen Ausschnitt aus einem erfindungsgemäßen Flächengebilde, bestehend aus einem endlosen Trägermaterial 5 im Schnitt, welches gegebenenfalls einen mehrschichtigen Aufbau aufweisen kann und beidseitig mit Selbstklebemasse 4 (Basisklebeschicht) und 6 (Klebemasse auf der gegenüberliegenden Trägerseite) vollflächig beschichtet ist. Einseitig sind zusätzlich Selbstklebegeometrien 3 (hier Kalotten aus Selbstklebemasse) in räumlichem Abstand beschichtet. Teile der Oberflächen der Selbstklebemassekalotten liegen als deaktivierte Bereiche 2 vor. Ein Verklebungsuntergrund (Substrat) 1, der nur leicht auf das Flächengebilde (Klebeband) aufgelegt wird, haftet nicht und kann problemlos verschoben werden (Doppelspitzenpfeil D; im weiteren soll durch einen Doppelspitzenpfeil D eine Verschiebbarkeit und durch einen durchgestrichenen Doppelspitzenpfeil die Nichtverschiebbarkeit des verklebten Substrats 1 dargestellt werden).

Die Figur 2, die das Flächengebilde gemäß Figur 1 im Verklebungszustand zeigt, dient zur Verdeutlichung des Mechanismus: Durch stärkeren Andruck verformen sich die Kalotten 3 aus Selbstklebemasse, die Kontaktfläche zum Verklebungsuntergrund 1 vergrößert sich derart, dass auch klebende Bereiche 7 mit dem Verklebungsuntergrund 1 in Kontakt treten. Die deaktivierten Bereiche 2 werden in die Masse gedrückt. Das verklebte Substrat 1 kann nicht mehr (oder nur sehr schwer) verschoben werden. Figur 2 zeigt eine Ausführung, bei der zwischen den Kalotten 3 im Verklebungszustand Kanäle 8 bestehen bleiben. Durch diese Kanäle 8 können während und nach der Verklebung Fluide abfließen. So kann beispielsweise eine Blasenbildung zwischen den Verklebungsflächen vermieden werden.

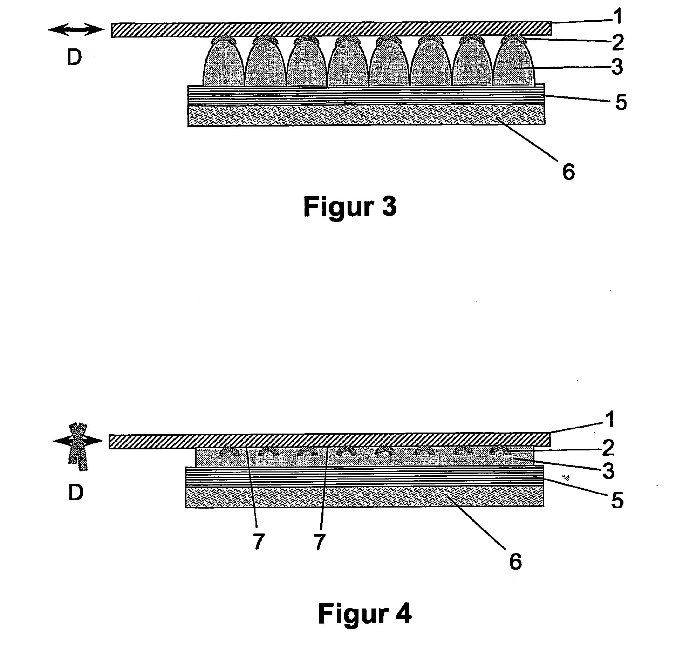

Figur 3 zeigt ein erfindungsgemäßes Flächengebilde, basierend auf einen einseitig vollflächig mit Selbstklebemasse 6 beschichteten endlosen Träger 5, welcher gegebenenfalls einen mehrschichtigen Aufbau aufweisen kann. Die zweite Seite des Trägers 5 ist mit Selbstklebemassegeometrien 3 beschichtet, deren Oberfläche partiell deaktiviert wurde 2. Die Selbstklebemassegeometrien 3 sind dabei so angeordnet und geformt, dass sich im Verklebungszustand (Figur 4) eine (vollflächige) Verklebung ohne den Einschluss von Fluiden ergibt: Unter Krafteinwirkung/Andruck verformen sich die Selbstklebemassegeometrien 3 derart, dass auch klebende Bereiche 7 mit dem Verklebungsuntergrund in Kontakt kommen und der Zwischenraum von Verklebungsfläche 1 und Träger 5 vollständig mit Selbstklebemasse (klebende Bereiche 7 resultierend aus den verformten Kalotten 3) und deaktivierter Masse 2 ausgefüllt wird.

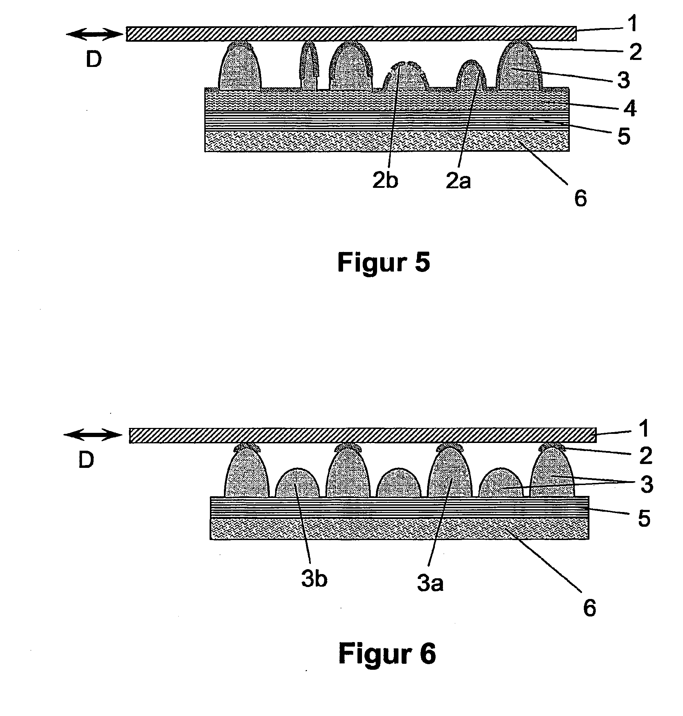

In der Figur 5 sind schließlich unterschiedlich geformte Kalotten 3 mit unterschiedlich großen deaktivierten Abschnitten 2 im seitlichen Schnitt dargestellt, die sich als besonders vorteilhaft erwiesen haben. Einige Bereiche 2a des Flächengebildes sind vollflächig deaktiviert; andere Bereiche 2b auf unterschiedliche Art nur partiell deaktiviert.

Figur 6 zeigt die im Beispiel 2 dargestellte besonders vorteilhafte Ausführungsform des Flächengebildes. Ein Teil 3a der Selbstklebemassekalotten 3 haben eine größere Höhe als die übrigen 3b. Ion diesem Beispiele haben 50 % der Selbstklebemassekalotten 3 eine größere Höhe als die übrigen. Die hohen Kalotten sind bevorzugt gleichmäßig über das Flächengebilde verteilt und an ihrer Spitze, dem Träger am weitesten abgewandten Punkt, partiell deaktiviert 2.

Das wie in Figur 6 beschriebene Flächengebilde kann ebenfalls mit einer Basisklebmassenschicht 4 analog zu derjenigen in Figur 1 ausgerüstet sein.

Im Folgenden soll ein erfindungsgemäßes selbstklebend ausgerüstetes Trägermaterial mittels eines Beispiels dargestellt werden, ohne auch hier die Erfindung unnötig einschränken zu wollen.

Beispiel 1

Erfindungsgemäß wurde ein einseitig beschichtetes Selbstklebeetikett hergestellt.

Der für dieses Etikett zum Einsatz gekommene Träger bestand aus einer 50 $\mu$m PolyethyIentherephthalatfolie mit einer Höchstzugkraft von größer 150 N/15 mm und einer Reißdehnung von kleiner 140 %.

Die Selbstklebemasse wurde im Thermosiebdruck auf den Träger appliziert, wobei es sich bei der Selbstklebemasse um einen Heißschmelzkleber handelte.

Diese Schmelzklebemasse setzte sich wie folgt zusammen:

Ein A-B/A-B-A Blockcopolymer, welches aus harten und weichen Segmenten besteht, mit einem Verhältnis der A-B-A zur A-B von 2:1 und einem Styrolgehalt im Polymer von 13 Mol.-%; der Anteil an der Klebemasse beträgt 40 Gew.-% (Kraton G) Kohlenwasserstoffharze mit einem Anteil von 14,5 Gew.-% (Super Resin HC 140)
ein Alterungsschutzmittel mit einem Anteil von weniger als 0,5 Gew.-% (Irganox)

Die eingesetzten Komponenten wurden in einem Thermomischer bei 175 °C homogenisiert.

Der Erweichungspunkt dieser Klebemasse betrug ca. 85 °C (DIN 52011), und die Klebmasse zeigte eine Viskosität von 2100 mPas bei 150 °C (DIN 53018, Brookfield DV II, Sp. 21). Die Glasübergangstemperatur betrug nach oben dargelegter Methode -10 °C.

Die direkte Beschichtung erfolgte mit 4,2 m/min bei einer Temperatur von 140 °C auf das Trägermaterial. Dieses wurde mit 40 $g/m^2$ beschichtet, wobei eine 25 Meshsieb-Schablone mit 20 % Durchlass und einer Dicke von 200 $\mu$m verwendet wurde.

Anschließend wurde die im Siebdruck aufgebrachte Selbstklebemasse über ein Sprühverfahren vollflächig mit einer sehr dünnen Lackschicht überzogen.

Das nach diesem Verfahren hergestellte Flächengebilde (Selbstklebeband oder Etikett) zeigte bei nur leichtem Andruck keinerlei Tack und keine Klebkraft. Es ließ sich daher mühelos und problemlos auch auf empfindlichen Untergründen exakt positionieren. Die Wahl eines transparenten Produktaufbaus (Träger, Selbstklebemasse und Lack) ließ darüber hinaus ein Erkennen beispielsweise von Positionierungsmarken durch das Klebeband hindurch zu. Nach Andruck war hingegen eine hohe Verklebungsfestigkeit gegeben. Gleichzeitig blieben Luftkanäle zwischen den einzelnen Kalotten bestehen, die eine blasenfreie Applikation garantierten.

Beispiel 2

Erfindungsgemäß wurde ein einseitig beschichtetes Selbstklebeetikett hergestellt.

Der für dieses Etikett zum Einsatz gekommene Träger bestand aus einer 50 $\mu$m Polyethylentherephthalatfolie mit einer Höchstzugkraft von größer 150 N/15 mm und einer Reißdehnung von kleiner 140 %.

Die Selbstklebemasse wurde im Thermosiebdruck auf den Träger appliziert, wobei es sich bei der Selbstklebemasse um einen Heißschmelzkleber handelte.

Diese Schmelzklebemasse setzte sich wie folgt zusammen:

Ein A-B/A-B-A Blockcopolymer, welches aus harten und weichen Segmenten besteht, mit einem Verhältnis der A-B-A zur A-B von 2:1 und einem Styrolgehalt im Polymer von 13 Mol.-%; der Anteil an der Klebemasse beträgt 40 Gew.-% (Kraton G) Kohlenwasserstoffharze mit einem Anteil von 14,5 Gew.-% (Super Resin HC 140)
ein Alterungsschutzmittel mit einem Anteil von weniger als 0,5 Gew.-% (Irganox)

Die eingesetzten Komponenten wurden in einem Thermomischer bei 175 °C homogenisiert.

Der Erweichungspunkt dieser Klebemasse betrug ca. 85 °C (DIN 52011), und die Klebmasse zeigte eine Viskosität von 2100 mPas bei 150 °C (DIN 53018, Brookfield DV II, Sp. 21). Die Glasübergangstemperatur betrug nach oben dargelegter Methode -10 °C.

Die direkte Beschichtung erfolgte mit 4,2 m/min bei einer Temperatur von 140 °C auf das Trägermaterial. Dieses wurde mit 30 $g/m^2$ beschichtet, wobei eine speziell angefertigte Sieb-Schablone in einer Dicke von 200 $\mu$m verwendet wurde. Diese Siebschablone war derartig gestaltet, dass 50% der damit aufgetragenen Klebemassenkalotten eine größere Höhe und etwas flachere Form aufwiesen. Beide Kalottengeometrien waren gleichmäßig über das Flächengebilde verteilt, so dass jede höhere Kalotte von niedrigeren umgeben war.

Anschließend wurde die im Siebdruck aufgebrachte Selbstklebemasse über eine Lack benetzte Walze partiell mit einer sehr dünnen Lackschicht überzogen. Der Andruck der Auftragswalze wurde derart gewählt, dass der Lack nur auf die Spitzen der höheren Kalotten partiell übertragen wurde und damit nur dieser Bereich partiell deaktiviert wurde.

Im Einzelnen war der Träger des Flächengebildes zu 80% mit Selbstklebemassekalotten bedeckt, von denen 50% eine größere Höhe aufwiesen und gleichzeitig derart an den Spitzen lackiert waren, dass 50% ihrer Projektionsfläche deaktiviert vorlagen. Demnach war das gesamte Flächengebilde zu 20% (= 80% * 50% * 50%) deaktiviert.

Das nach diesem Verfahren hergestellte Flächengebilde (Selbstklebeband oder Etikett) zeigte bei nur leichtem Andruck keinerlei Tack und keine Klebkraft. Es ließ sich daher mühelos und problemlos auch auf empfindlichen Untergründen exakt positionieren. Die Wahl eines transparenten Produktaufbaus (Träger, Selbstklebemasse und Lack) ließ darüber hinaus ein Erkennen beispielsweise von Positionierungsmarken durch das Klebeband hindurch zu. Nach Andruck war hingegen eine hohe Verklebungsfestigkeit gegeben. Durch den niedrigeren Deaktivierungsgrad als im Beispiel 1 kam es zu einer größeren Kontaktfläche zwischen Selbstklebemasse und Verklebungsuntergrund und dadurch zu einer höheren Klebkraft. Gleichzeitig blieben Luftkanäle zwischen den einzelnen Kalotten bestehen, die eine blasenfreie Applikation garantierten.

**Patentansprüche**

1.  Verfahren zum Verkleben eines zumindest teilflächig mit Selbstklebemasse ausgerüsteten Flächengebildes auf einem Substrat, wobei bei dem Flächengebilde die Selbstklebemasse in Form einer Vielzahl geometrischer Körper auf einer ersten Flächenschicht des Flächengebildes vorliegt, und bei dem die Oberfläche zumindest einiger der geometrischen Körper zumindest partiell derart behandelt ist, dass der behandelte Teil der Oberfläche eine geringere Klebrigkeit aufweist als die nicht behandelte Selbstklebemasse, **dadurch gekennzeichnet, dass** durch Erhöhung des Anpressdrucks nicht behandelte Bereiche der Selbstklebemassenoberfläche in Kontakt mit dem Substrat kommen, indem sich die geometrischen Körper verformen, sowie optional die behandelten Bereiche aufbrechen, so dass hier die Selbstklebemasse hervortritt.

2.  Verfahren nach Anspruch 1, **dadurch gekennzeichnet, dass** die Oberfläche aller geometrischen Körper des Flächengebildes partiell behandelt ist.

3.  Verfahren zum Verkleben eines zumindest teilflächig mit Selbstklebemasse ausgerüsteten Flächengebildes auf einem Substrat, wobei bei dem Flächengebilde die Selbstklebemasse in Form einer Vielzahl geometrischer Körper auf einer ersten Flächenschicht des Flächengebildes vorliegt, und bei dem die Oberfläche zumindest einiger der geometrischen Körper zumindest partiell derart behandelt ist, dass der behandelte Teil der Oberfläche eine geringere Klebrigkeit aufweist als die nicht behandelte Selbstklebemasse, **dadurch gekennzeichnet, dass** durch Erhöhung des Anpressdrucks die behandelten Bereiche aufbrechen, so dass hier die Selbstklebemasse hervortritt, wobei die Oberfläche aller geometrischen Körper des Flächengebildes vollflächig behandelt ist.

4.  Verfahren nach zumindest einem der vorangehenden Ansprüche, **dadurch gekennzeichnet, dass** die Selbstklebemasse auf der ersten Flächenschicht des Flächenelementes mit einem Masseauftrag von 5 bis 400 g/m$^2$, bevorzugt 20 bis 300 g/m$^2$, besonders bevorzugt 30 bis 180 g/m$^2$ vorliegt.

5.  Verfahren nach zumindest einem der vorangehenden Ansprüche, **dadurch gekennzeichnet, dass** die Selbstklebemasse auf der ersten Flächenschicht in geometrischen Körpern unterschiedlicher Höhe vorliegt.

6.  Verfahren nach einem der Ansprüche 1 oder 2, **dadurch gekennzeichnet, dass** die Selbstklebemassegeometrien auf der ersten Flächertschicht bezogen auf deren Projektionsfläche zu 10 bis 80% und bevorzugt 15 bis 75 % deaktiviert ist.

7.  Verfahren nach zumindest einem der vorangehenden Ansprüche, **dadurch gekennzeichnet, dass** im Verklebungszustand Kanäle zwischen den geometrischen Körpern aus Selbstklebemasse bestehen bleiben, die eine blasenfreie Applikation und blasenfreie Verklebung gewährleisten sowie Fluide aus der Verklebungsebene abführen können.

8.  Zumindest teilflächig mit Selbstklebemasse ausgerüstetes Flächengebilde, wobei die Selbstklebemasse in Form einer Vielzahl geometrischer Körper auf einer ersten Flächenschicht des Flächengebildes vorliegt, wobei die Oberfläche zumindest einiger der geometrischen Körper partiell derart behandelt ist, dass der behandelte Teil der Oberfläche eine geringere Klebrigkeit aufweist als die nicht behandelte Selbstklebemasse, **dadurch gekennzeichnet, dass** die Behandlung in Form einer Auftragung einer Deckschicht aus Lacken geschieht, und die geometrischen Körper unter erhöhtem Anpressdruck beim Verkleben des Flächengebildes auf einem Substrat verformbar sind, so dass nicht behandelte Bereiche der Selbstklebemassenoberfläche in Kontakt mit dem Substrat kommen, in dem sich die geometrischen Körper verformen, und optional die behandelten Bereiche aufbrechen, so dass hier die Selbstklebemasse hervortritt.

9.  Zumindest teilflächig mit Selbstklebemasse ausgerüstetes Flächengebilde, wobei die Selbstklebemasse in Form einer Vielzahl geometrischer Körper auf einer ersten Flächenschicht des Flächengebildes vorliegt, wobei die Oberfläche zumindest einiger der geometrischen Körper partiell derart behandelt ist, dass der behandelte Teil der Oberfläche eine geringere Klebrigkeit aufweist als die nicht behandelte Selbstklebemasse, **dadurch gekennzeichnet, dass** die Behandlung in Form einer Auftragung einer Deckschicht aus Lacken geschieht, und die geometrischen Körper unter erhöhtem Anpressdruck beim Verkleben des Flächengebildes auf einem Substrat verformbar sind, so dass die behandelten Bereiche aufbrechen, so dass hier die Selbstklebemasse hervortritt,

wobei die Oberfläche aller geometrischen Körper des Flächengebildes vollflächig behandelt ist.

10. Verfahren nach einem der Ansprüche 1 bis 7 unter Verwendung eines Klebebandes nach einem der Ansprüche 8 oder 9.

**Claims**

1. Method of adhesively bonding a sheetlike structure provided over at least part of its area with self-adhesive mass to a substrate, the self-adhesive mass, in the sheetlike structure, being present in the form of a multiplicity of geometric structures on a first areal layer of the sheetlike structure, and the surface of at least some of the geometric structures having been at least partially treated such that the treated part of the surface has a lower tack than the untreated self-adhesive mass, **characterized in that** as a result of an increase in the applied pressure, untreated regions of the surface of the self-adhesive mass come into contact with the substrate, by deformation of the geometric structures, and also, optionally, the treated regions break up, and so here the self-adhesive mass emerges.

2. Method according to Claim 1, **characterized in that** the surface of all the geometric structures of the sheetlike structure has been partially treated.

3. Method of adhesively bonding a sheetlike structure provided over at least part of its area with self-adhesive mass to a substrate, the self-adhesive mass, in the sheetlike structure, being present in the form of a multiplicity of geometric structures on a first areal layer of the sheetlike structure, and the surface of at least some of the geometric structures having been at least partially treated such that the treated part of the surface has a lower tack than the untreated self-adhesive mass, **characterized in that** as a result of an increase in the applied pressure, the treated regions break up, and so here the self-adhesive mass emerges, the surface of all the geometric structures of the sheetlike structure having been wholly treated.

4. Method according to at least one of the preceding claims, **characterized in that** the self-adhesive mass is present on the first areal layer of the sheetlike element with a coatweight of 5 to 400 g/m$^2$, preferably 20 to 300 g/m$^2$, more preferably 30 to 180 g/m$^2$.

5. Method according to at least one of the preceding claims, **characterized in that** the self-adhesive mass is present on the first areal layer in geometric structures of different heights.

6. Method according to either of Claims 1 and 2, **characterized in that** the self-adhesive mass geometry on the first areal layer has been deactivated, relative to its projection area, to an extent of 10% to 80% and preferably 15% to 75%.

7. Method according to at least one of the preceding claims, **characterized in that** in the adhesively bonded state channels are left between the geometric structures of self-adhesive mass, and ensure bubble-free application and bubble-free adhesive bonding and also are able to remove fluids from the adhesive-bonding plane.

8. Sheetlike structure provided over at least part of its area with self-adhesive mass, the self-adhesive mass being present in the form of a multiplicity of geometric structures on a first areal layer of the sheetlike structure, the surface of at least some of the geometric structures having been partially treated such that the treated part of the surface has a lower tack than the untreated self-adhesive mass, **characterized in that** the treatment takes place in the form of an application of a top layer of coating materials, and the geometric structures are deformable under an increased applied pressure when the sheetlike structure is adhesively bonded to a substrate, and so untreated regions of the surface of the self-adhesive mass come into contact with the substrate, by deformation of the geometric structures, and, optionally, the treated regions break up, and so here the self-adhesive mass emerges.

9. Sheetlike structure provided over at least part of its area with self-adhesive mass, the self-adhesive mass being present in the form of a multiplicity of geometric structures on a first areal layer of the sheetlike structure, the surface of at least some of the geometric structures having been partially treated such that the treated part of the surface has a lower tack than the untreated self-adhesive mass, **characterized in that** the treatment takes place in the form of an application of a top layer of coating materials, and the geometric structures are deformable under an increased applied pressure when the sheetlike structure is adhesively bonded to a substrate, and so the treated regions break up, and so here the self-adhesive mass emerges, the surface of all the geometric structures of the sheetlike structure having been wholly treated.

10. Method according to any of Claims 1 to 7, using an adhesive tape according to either of Claims 8 and 9.

**Revendications**

1. Procédé pour coller une structure plane au moins partiellement pourvue de matière auto-adhésive sur un substrat, la matière auto-adhésive de la structure plane se présentant sous forme d'une pluralité de corps géométriques sur une première couche de surface de la structure plane, et la surface d'au moins certains des corps géométriques étant au moins partiellement traitée de telle sorte que la partie traitée de la surface présente une adhésivité plus faible que la matière auto-adhésive non traitée, **caractérisé en ce que** par augmentation de la pression d'application, des régions non traitées de la surface de la matière auto-adhésive viennent en contact avec le substrat, par la déformation des corps géométriques, et en option les régions traitées se rompent, de sorte que la matière auto-adhésive ressorte.

2. Procédé selon la revendication 1, **caractérisé en ce que** la surface de tous les corps géométriques de la structure plane est traitée partiellement.

3. Procédé pour coller une structure plane au moins partiellement pourvue de matière auto-adhésive sur un substrat, la matière auto-adhésive de la structure plane se présentant sous forme d'une pluralité de corps géométriques sur une première couche de surface de la structure plane, et la surface d'au moins certains des corps géométriques étant au moins partiellement traitée de telle sorte que la partie traitée de la surface présente une adhésivité plus faible que la matière auto-adhésive non traitée, **caractérisé en ce que** par augmentation de la pression d'application, les régions traitées se rompent, de sorte que la matière auto-adhésive ressorte, la surface de tous les corps géométriques de la structure plane étant traitée sur toute la surface.

4. Procédé selon au moins l'une quelconque des revendications précédentes, **caractérisé en ce que** la matière auto-adhésive sur la première couche de surface de l'élément plan se présente avec une enduction de matière de 5 à 400 g/m$^2$, de préférence de 20 à 300 g/m$^2$, et particulièrement préférablement de 30 à 180 g/m$^2$.

5. Procédé selon au moins l'une quelconque des revendications précédentes, **caractérisé en ce que** la matière auto-adhésive se présente sur la première couche de surface dans des corps géométriques de différentes hauteurs.

6. Procédé selon la revendication 1 ou 2, **caractérisé en ce que**
la géométrie de la matière auto-adhésive sur la première couche de surface par rapport à sa surface en projection est désactivée à raison de 10 à 80%, et de préférence de 15 à 75%.

7. Procédé selon au moins l'une quelconque des revendications précédentes, **caractérisé en ce que** dans l'état de collage, des canaux subsistent entre les corps géométriques en matière auto-adhésive, lesquels garantissent une application sans bulle et un collage sans bulle et permettent d'évacuer les fluides hors du plan de collage.

8. Structure plane pourvue au moins partiellement de matière auto-adhésive, la matière auto-adhésive se présentant sous forme d'une pluralité de corps géométriques sur une première couche de surface de la structure plane, la surface d'au moins certains des corps géométriques étant partiellement traitée de telle sorte que la partie traitée de la surface présente une adhésivité plus faible que la matière auto-adhésive non traitée, **caractérisée en ce que** le traitement se produit sous forme d'une enduction d'une couche de recouvrement de vernis et les corps géométriques peuvent être déformés par une pression d'application accrue lors du collage de la structure plane sur un substrat, de sorte que des régions non traitées de la surface de la matière auto-adhésive viennent en contact avec le substrat, par la déformation des corps géométriques, et en option les régions traitées se rompent, de sorte que la matière auto-adhésive ressorte.

9. Structure plane pourvue au moins partiellement de matière auto-adhésive, la matière auto-adhésive se présentant sous forme d'une pluralité de corps géométriques sur une première couche de surface de la structure plane, la surface d'au moins certains des corps géométriques étant partiellement traitée de telle sorte que la partie traitée de la surface présente une adhésivité plus faible que la matière auto-adhésive non traitée, **caractérisée en ce que** le traitement se produit sous forme d'une enduction d'une couche de recouvrement de vernis et les corps géométriques peuvent être déformés par une pression d'application accrue lors du collage de la structure plane sur un substrat, de sorte que les régions traitées se rompent, de sorte que la matière auto-adhésive ressorte, la surface de tous les corps géométriques de la structure plane étant traitée sur toute la surface.

10. Procédé selon l'une quelconque des revendications 1 à 7, utilisant un ruban adhésif selon la revendication 8 ou 9.

**Figur 1**

**Figur 2**

**Figur 3**

**Figur 4**

**Figur 5**

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2510120 A
- DE 2610135 A1
- DE 2834441 A1
- DE 2365532 A1
- DE 974178
- DE 4237252 C2
- EP 0353972 B1
- DE 19751873 A1
- DE 3346100 A1
- DE 4308649
- GB 836097 A
- EP 0725809 B1

**In der Beschreibung aufgeführte Nicht-Patentliteratur**

- Römpp Chemie-Lexikon. Georg Thieme Verlag, 1990, vol. 2, 1587